Europäisches Patentamt

European Patent Office

Office européen des brevets

(11) Numéro de publication: **0 214 893 B1**

# FASCICULE DE BREVET EUROPEEN

(45) Date de publication de fascicule du brevet: **29.07.92** (51) Int. Cl.5: **B64G 1/58**

(21) Numéro de dépôt: **86401772.8**

(22) Date de dépôt: **07.08.86**

(54) **Eléments de protection thermique reutilisable pour un objet soumis à des échauffements importants.**

(30) Priorité: **12.08.85 FR 8512281**

(43) Date de publication de la demande:
**18.03.87 Bulletin 87/12**

(45) Mention de la délivrance du brevet:
**29.07.92 Bulletin 92/31**

(84) Etats contractants désignés:
**BE CH DE FR GB IT LI LU NL**

(56) Documents cités:
FR-A- 2 469 388      US-A- 4 124 732
US-A- 4 151 800      US-A- 4 201 611
US-A- 4 439 968      US-A- 4 456 208

(73) Titulaire: **CENTRE NATIONAL D'ETUDES SPA-TIALES**
**2, Place Maurice Ouentin**
**F-75001 Paris(FR)**

(72) Inventeur: **Jouffreau, Jacques**
**Chemin des Graves**
**F-31450 Montgiscard(FR)**

(74) Mandataire: **Mongrédien, André et al**
**c/o BREVATOME 25, rue de Ponthieu**
**F-75008 Paris(FR)**

Rank Xerox (UK) Business Services

## Description

La présente invention se rapporte au domaine des protections thermiques et a plus spécialement pour objet des éléments de protection réutilisables pouvant être employés sur des objets soumis à des échauffements importants tels que des engins aéronautiques ou spatiaux.

Lorsqu'un engin spatial effectuant la desserte aller et retour d'une orbite quelconque pénètre dans l'atmosphère, il subit un échauffement cinétique très important dû au freinage que l'atmosphère exerce sur lui. La période d'échauffement dépend de la trajectoire de rentrée et dure de 15 à 25 minutes environ. Les flux cinétiques sont très importants au nez de l'appareil et aux bords d'attaque des ailes et des dérives, importants à l'intrados ainsi que sur les flancs de l'avion et soins élevés à l'extrados qui subit cependant localement un échauffement important. Une protection de l'appareil est donc indispensable pour éviter la détérioration de la cellule et des équipements et même la perte de l'appareil car les températures atteintes peuvent dépasser 1000°C et même atteindre des valeurs de l'ordre de 2000 à 2500°C à certains endroits. La protection doit avoir une efficacité variable d'une zone à l'autre en fonction du flux thermique subi. On retrouve les mêmes problèmes avec un engin très rapide ne quittant pas l'atmosphère.

La principale méthode utilisée à l'heure actuelle consiste à recouvrir l'engin de tuiles dont chacune constitue un élément de protection isolé. En effet, ces tuiles doivent s'adapter au galbe de leur support et aux découpes au niveau des raccordements, portes, trappes, etc... Leur géométrie est donc variable d'une tuile à l'autre, et ce dans les trois dimensions. D'autre part, suivant qu'elle sont disposées à un endroit de l'appareil ou à un autre, l'efficacité exigée en fonction du flux thermique subi est différente. Les épaisseurs d'isolant sont donc différentes et peuvent éventuellement ne pas être constantes pour une tuile donnée.

On comprend que ceci entraîne un certain nombre d'inconvénients dûs au fait que les tuiles sont presque toutes différentes. Ceci conduit à avoir un nombre de plans élevé, un coût de production élevé à cause de la variété des outillages nécessaires, un coût important de mise au point et de qualification à cause des très nombreuses configurations d'implantation et un coût important de contrôle car les appareils de contrôle doivent être adaptés à chaque tuile et les essais de qualification sont multiples. Enfin, les contrôles nécessaires entre deux vols sont extrêmement longs et compliqués.

Une autre méthode consiste à réaliser des éléments rigides, par exemple parallélépipédiques, associant d'une part un ou plusieurs écrans réfractaires et d'autre part une couche isolante. Le ou les écrans réfractaires se trouvent du côté extérieur et sont donc exposés à l'écoulement aérodynamique tandis que la couche isolante se trouve entre l'écran réfractaire et la structure de l'engin. Eventuellement, les écrans réfractaires peuvent être ondulés pour favoriser la compensation des dilatations thermiques. Ce système présente les mêmes inconvénients que le système à base de tuiles décrit ci-dessus, car là aussi chaque élément rigide doit être conçu afin qu'il soit adapté aux conditions géométriques et thermiques locales de la zone qu'il doit recouvrir.

D'autre part le brevet américain US-A-4 439 968 est relatif à un élément de protection thermique pour engin spatial.

Cet élément se compose d'un écran réfractaire de forme initiale conique externe en "chapeau chinois" et hexagonale avec recouvrement des bords de deux écrans adjacents. Il comprend principalement un écran réfractaire et son moyen de fixation. Pour chaque écran réfractaire un seul moyen de fixation est prévu. Celui-ci est constitué d'une tige filetée agissant au centre de l'écran réfractaire. Elle permet de déformer et de précontraindre l'écran réfractaire une fois mis en place. Une épaisse couche isolante est prévue entre cet écran réfractaire et l'objet à protéger. Par contre, cet écran ne peut suivre le profil de la surface à protéger, qu'à la seule condition d'être un petit élément utilisé en très grande quantité. En effet, comme représenté sur les figures, ces différents écrans se chevauchent les uns sur les autres selon certains de leurs côtés, permettant ainsi un très léger changement de direction d'un écran à l'autre, de manière à épouser les contours de la surface externe de l'objet à protéger. Ce changement de direction d'un écran à l'autre doit toutefois rester infime, sous peine de ne pas obtenir un revêtement général constitué d'une surface lisse et aérodynamique et d'aboutir à un arrachement des panneaux.

La présente invention a pour but d'éliminer ces inconvénients en proposant un élément de protection thermique réutilisable peu coûteux, facile à réaliser, permettant de suivre exactement le profit de la surface à protéger, facile à installer sur l'objet à protéger et facile à contrôler et à entretenir.

L'élément de protection thermique selon l'invention, destiné à protéger un objet soumis à des échauffements importants, comporte, de manière connue, un écran réfractaire et une couche isolante entre l'écran réfractaire et la structure de l'engin.

L'expression "soumis à des échauffements importants" utilisée dans la présente description signifie que l'objet à protéger peut subir des températures supérieures à 1 000°C, pouvant être de l'ordre de 1 200 à 1 300°C ou plus, et même atteindre des valeurs de l'ordre de 2 000 à 2 500°C ou davantage.

En outre, il comprend principalement des moyens de fixation de l'écran réfractaire sur l'objet comprenant :

- une rampe allongée ;
- des moyens de fixation de cette rampe sur l'objet ; et
- des moyens de maintien de l'écran réfractaire sur la rampe.

Selon l'invention :

- l'écran réfractaire est de forme générale rectangulaire, comprenant au moins une feuille mince en matériau réfractaire et ayant une souplesse suffisante pour s'adapter à la forme de l'objet au niveau de la zone à protéger, c'est-à-dire parallèle ou quasi parallèle à la surface de l'objet à protéger dans la zone au-dessus de laquelle elle se trouve ;
- les moyens de fixation de l'écran réfractaire agissent sur deux écrans réfractaires adjacents et superposés au même endroit et interagissent ;
- les moyens de maintien de l'écran réfractaire sur la rampe sont constitués d'un profil serré par des vis se vissant dans les moyens de fixation de la rampe sur l'objet pour serrer les bords de deux écrans réfractaires adjacents sur la rampe ;
- les moyens de fixation de la rampe sur l'objet sont constitués d'un profilé ou de pieds ou supports fixés sur l'objet et sur lesquels et montée la rampe :
- la surface de la rampe sur laquelle vient se placer le bord d'au moins un écran réfractaire est courbe afin de pouvoir maintenir deux écrans réfractaires dont les feuilles minces ne sont pas coplanaires et permettre d'obtenir le galbe de l'écran réfractaire ;
  la structure de ces moyens de fixation de l'écran réfractaire leur permettant ainsi de :
- participer au maintien et à la création du galbe de l'écran réfractaire ;
- participer à la résistance mécanique de l'écran réfractaire ;
- permettre le montage contigu de deux écrans réfractaires dont les feuilles minces ne sont pas coplanaires ;
- assurer une étanchéité vis-à-vis de l'air, de l'eau et du plasma ; et
- chaque élément pouvant ainsi constituer avec des éléments voisins identiques une bande de grande longueur dont la forme épouse en tout point le galbe de la surface externe de l'objet, cette bande contribuant à former une surface aérodynamiquement lisse dont le galbe est continu.

Quant à l'expression "ayant une souplesse suffisante pour s'adapter à la forme de l'objet au niveau de la zone à protéger", cela signifie que la feuille mince est suffisamment souple pour se déformer élastiquement au point d'être parallèle ou quasi-parallèle à la surface de l'objet dans la zone au-dessus de laquelle elle se trouve. Cette disposition présente de nombreux avantages dont les principaux sont la réduction des coûts de réalisation et de maintenance grâce à la standardisation des éléments de protection thermique et au fait que ceux-ci sont réutilisables. Ces avantages ainsi que d'autres seront développés dans la suite de la présente description.

De préférence, ladite feuille mince est réalisée en un métal réfractaire, le métal réfractaire est choisi dans le groupe constitué par le niobium, le titane, le tantale, ainsi que leurs alliages et les alliages à base de nickel ou de chrome.

Dans une autre réalisation, la feuille mince est réalisée en un matériau composite à base de fibres.

Selon un aspect de l'invention, ladite feuille mince peut être équipée de moyens de rigidification qui comprennent éventuellement une feuille fixée sur la face de la feuille mince située en regard de la couche isolante.

L'élément de protection thermique réutilisable comprend éventuellement une feuille supplémentaire servant à améliorer la résistance mécanique de l'écran réfractaire.

On prévoit des moyens pour absorber la dilatation de l'écran réfractaire dans au moins une direction, qui comprennent éventuellement au moins deux feuilles minces placées l'une à la suite de l'autre, l'une de ces feuilles comporte à une extrémité un décrochement pouvant s'engager librement sous le bord correspondant de l'autre feuille mince permettant ainsi d'absorber la dilatation des deux feuilles minces dans le sens longitudinal. Dans ces deux cas, la feuille mince peut comprendre des ondulations longitudinales permettant d'absorber la dilatation dans le sens transversal.

D'autre part, les moyens de maintien du bord de l'écran réfractaire sur la rampe peuvent comprendre un profilé fixé sur la rampe, ce profilé ayant au moins un bord recourbé disposé de sorte que le bord de l'écran réfractaire puisse se placer entre le bord du profilé et la rampe, ledit bord recourbé ayant une souplesse suffisante pour appliquer le bord de l'écran réfractaire sur la rampe tout en permettant la dilatation de cet écran réfractaire.

De plus, les moyens de fixation de l'écran réfractaire sur l'objet peuvent servir également à fixer la couche isolante sur cet objet.

L'invention apparaîtra mieux à la lecture de la description qui va suivre, donnée à titre d'exemple purement illustratif et nullement limitatif, en référence aux dessins annexés, dans lesquels :
- la figure 1 est une vue schématique montrant un engin aéronautique ou spatial pouvant être équipé des éléments de protection thermique objets de l'invention ;
- la figure 2 est une vue schématique en perspective montrant un mode de réalisation d'un écran réfractaire utilisé dans un élément de protection selon l'invention ;
- les figures 3a et 3b sont des vues schématiques en perspective montrant comment les feuilles minces des écrans réfractaires peuvent se déformer élastiquement dans une direction longitudinale et éventuellement dans une direction transversale ;
- la figure 4 est une vue schématique en perspective et partiellement en coupe d'un écran réfractaire selon l'invention, vu à plus grande échelle ;
- la figure 5 est une vue schématique de profil montrant la disposition relative des constituants ;
- la figure 6 est une vue schématique en coupe et en perspective d'un premier moyen de fixation des écrans réfractaires sur la structure de l'engin ;
- la figure 7a est une vue semblable à la figure 6 montrant un deuxième moyen de fixation des écrans réfractaires sur la structure de l'engin, la rampe reposant sur des pieds ;
- la figure 7b est une vue semblable à la figure 7a montrant une autre disposition possible pour les pieds soutenant la rampe ;
- la figure 8a est une vue schématique en coupe du mode de réalisation des figures 7a ou 7b dans une zone où il n'y a pas de vis de fixation du profilé de maintien sur la rampe,
- la figure 8b est une vue semblable à la figure 8a dans une zone où il y a une vis de fixation du profilé de maintien sur la rampe,
- la figure 9 est une vue semblable aux figures 8a et 8b illustrant une autre forme du profilé de maintien et du bord des feuilles minces,
- la figure 10 est une vue schématique en perspective montrant une feuille mince avec des ondulations longitudinales,
- la figure 11 est une vue schématique en perspective montrant de manière plus détaillée la structure du profilé servant à maintenir le bord des écrans réfractaires sur la rampe,
- la figure 12 est une vue schématique en coupe et en perspective montrant comment on peut intercaler une feuille supplémentaire entre l'écran réfractaire et la couche isolante,
- la figure 13a est une vue schématique de profil montrant comment la couche isolante peut être réalisée sous forme hybride, et

- la figure 13b est une vue schématique en perspective de la partie rigide de la couche isolante de la figure 13a.

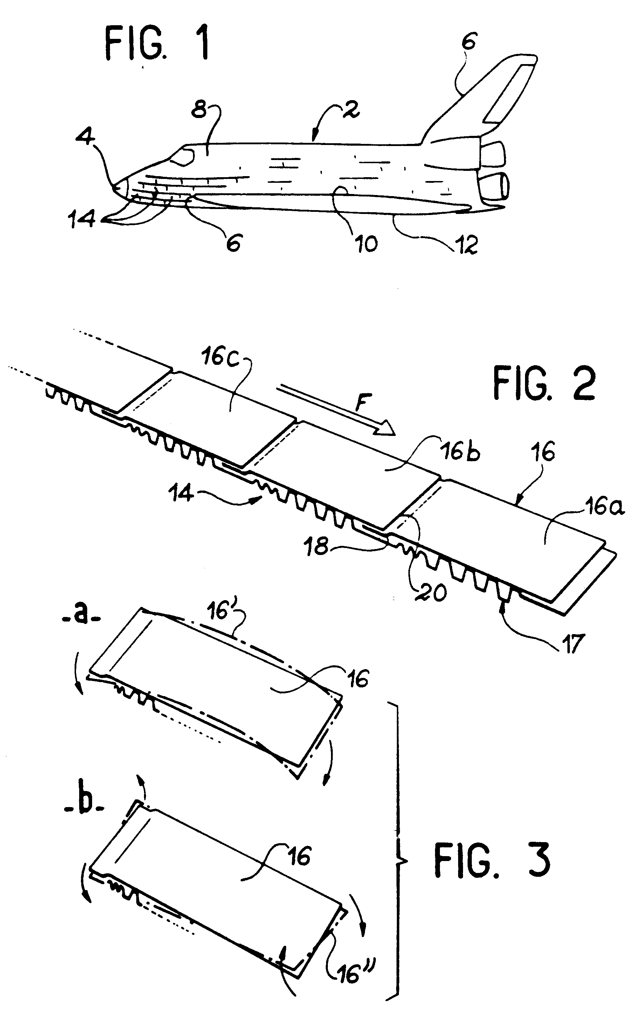

La figure 1 montre un engin spatial 2 destiné à effectuer un vol orbital et à revenir au sol une fois la campagne d'expériences terminée. Il peut également s'agir d'un engin destiné à un vol suborbital. Lors de la rentrée dans l'atmosphère, cet engin subit un échauffement très important au nez 4 ainsi qu'aux bords d'attaque 6 des ailes et des dérives et à l'intrados 12 de l'engin tandis que l'échauffement est moins important le long du fuselage 8 et à l'extrados 10. Les éléments de protection thermique objets de la présente invention s'appliquent surtout au fuselage 8 et aux surfaces 10 et 12 de l'engin, ce qui permet cependant de recouvrir la majeure partie de la surface de l'engin.

Si l'on se reporte à la figure 2, on voit que, dans le mode de réalisation préféré, un écran réfractaire 14 selon l'invention se compose d'un ensemble de feuilles minces rectangulaires 16 disposées les unes à la suite des autres formant ainsi une bande (feuilles 16a, 16b, 16c, ... sur la figure). Chaque feuille 16 est renforcée sur sa face inférieure par une feuille ondulée 17 afin d'en améliorer la rigidité tout en lui conservant une souplesse suffisante. On voit encore sur la figure 2 que chaque feuille mince (par exemple la feuille 16a sur la partie droite de la figure) comporte, à une de ses extrémités, un décrochement 18 qui vient librement sous le bord correspondant 20 de la feuille suivante 16b. Cette disposition permet à chacune des feuilles minces 16 de se dilater librement au moment de la rentrée dans l'atmosphère lorsque l'engin subit un échauffement important. Chaque feuille mince 16 peut se déformer pour s'adapter au galbe de l'engin, ce qui permet d'utiliser par exemple toute une bande le long du fuselage, du nez jusqu'à la queue de l'appareil, ou, pour des raisons pratiques, une succession de bandes plus courtes. Le sens d'écoulement de l'air est indiqué par la flèche F de la figure 2 et l'on comprend que la forme donnée au décrochement 18 empêche le plasma de pénétrer sous les feuilles minces 16.

Les figures 3a et 3b montrent comment les feuilles minces 16 peuvent se déformer pour s'adapter au galbe de l'appareil. On voit sur la figure 3a que la feuille 16 peut se plier dans le sens longitudinal et arriver à la position déformée 16' représentée en traits mixtes. Sur la figure 3b, la feuille 16 présente un léger gauchissement et arrive à la position 16" qui est également représentée en traits mixtes. Pour la clarté du dessin, on a exagéré la courbure des lignes 16' et 16", mais, en réalité, les déformations sont beaucoup plus faibles. La structure de l'engin étant courbée dans les deux sens, on s'adapte d'une part par flexion longitudinale des écrans réfractaires, d'autre part par gauchissement de ceux-ci. Pour obtenir ce gauchissement, on peut réaliser directement les écrans réfractaires avec un léger galbe ou réaliser des éléments plans, le galbe pouvant éventuellement être donné par les moyens de fixation.

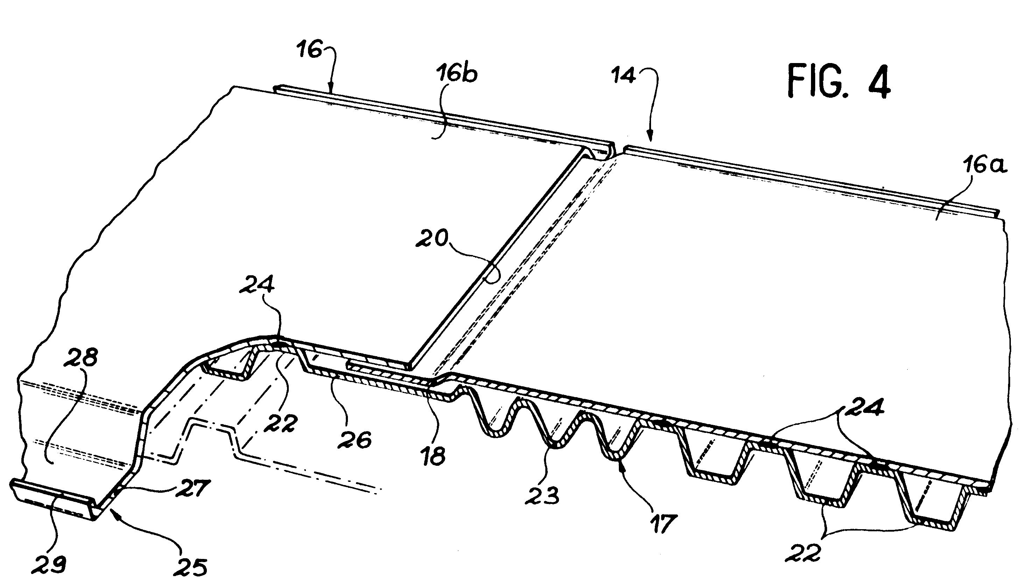

L'élément illustré à la figure 2 apparaît mieux sur la vue agrandie de la figure 4 qui représente la zone de contact entre deux feuilles consécutives 16a et 16b. On voit sur cette figure le décrochement 18 de la feuille 16a qui pénètre sous le bord 20 de la feuille 16b sans frottement serré, ce qui permet la dilatation longitudinale des feuilles 16a et 16b. On voit encore sur la figure 4 que la feuille ondulée 17 servant de rigidificateur se compose de plusieurs parties : une première partie 22 dont les ondulations sont assemblées en 24 avec la feuille mince 16a, une partie ondulée 23 située au voisinage de l'extrémité de la feuille 16a correspondant au décrochement 18, et une partie plane 26, située au-dessous du décrochement 18, qui se continue par une nouvelle partie 22 assemblée avec la plaque 16b. On peut utiliser par exemple une feuille ondulée de 0,1 mm d'épaisseur, le pas et la hauteur des ondulations de la partie 22 étant de 8 à 10 mm environ. La longueur de la partie plane 26 est suffisante pour laisser un espace permettant la dilatation relative des plaques 16a et 16b au niveau du décrochement 18. La partie 23 de la tôle 17 n'est pas en contact avec la feuille 16a : cette partie 23 se comporte comme un soufflet, ce qui permet à la tôle 17 d'absorber les dilatations des feuilles minces 16.

Bien entendu, il ne s'agit là que d'un exemple de réalisation et on ne sortirait pas du cadre de l'invention en supprimant le soufflet 23 et la partie plane 26, les feuilles 16 se recouvrant toujours, mais étant indépendantes les unes des autres. On ne sortirait pas non plus du cadre de l'invention en supprimant la tôle 17.

On voit encore sur la figure 4 que le bord 25 de chaque feuille mince 16 se présente sous la forme d'une bride 27 formant une gouttière 28 limitée par un rebord 29 : l'avantage de cette forme sera expliqué ci-dessous lorsqu'on décrira les moyens de fixation des écrans réfractaires 14 sur la structure de l'engin.

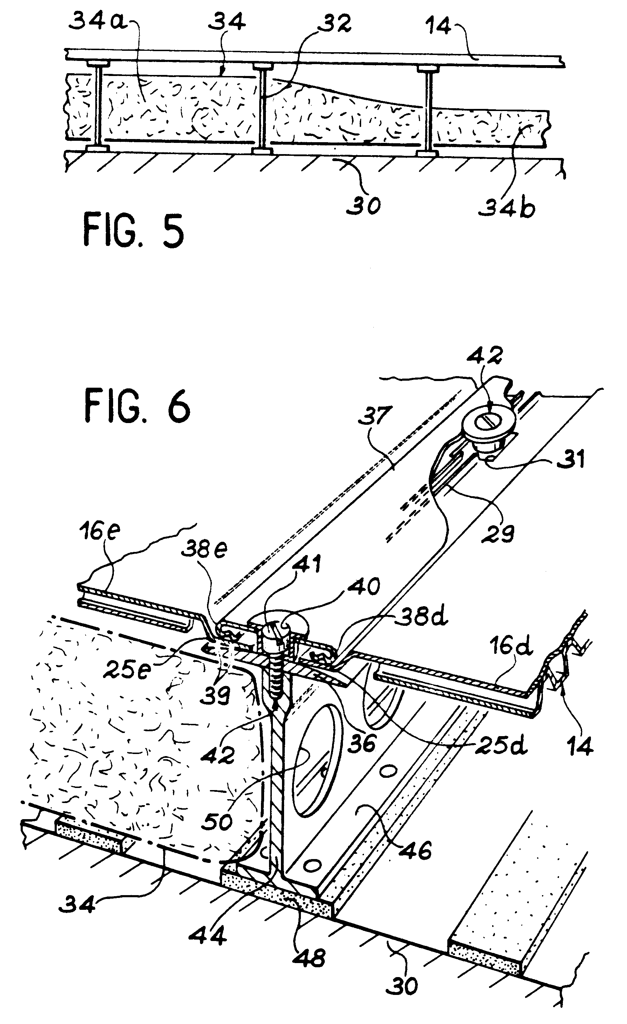

La figure 5 est un schéma de principe montrant comment sont montés les éléments de protection thermique objets de l'invention. On voit sur cette figure que les écrans réfractaires 14 sont fixés à la structure 30 de l'engin par des moyens de fixation 32, qui seront décrits en détail ci-dessous, tandis que la couche isolante 34 est disposée entre la structure 30 de l'engin et les écrans réfractaires 14. De préférence, ce sont les mêmes éléments de fixation 32 qui servent à fixer et les feuilles minces 14 et la couche isolante 34. On voit encore sur la figure 5 qu'on peut faire varier l'épaisseur de la couche 34 selon la température atteinte dans les différentes zones de l'appareil qu'elle recouvre. Par exemple, sur la figure 5, la couche est épaisse dans sa partie gauche 34a et beaucoup plus mince dans sa partie droite 34b. Ainsi, on peut jouer sur l'épaisseur de la couche isolante sans modifier le montage des écrans réfractaires 14, ce qui simplifie la construction et l'installation de la protection thermique.

La figure 6 illustre un premier mode de fixation des écrans réfractaires 14 sur la structure de l'engin. On voit, sur la partie gauche de cette figure, la couche isolante 34 placée entre un écran réfractaire et la structure de l'engin. Dans cette variante, les moyens de fixation comprennent essentiellement une rampe allongée 36 ayant deux bords parallèles sur lesquels viennent reposer respectivement les bords longitudinaux 25d et 25e de deux feuilles minces voisines 16d et 16e. Le maintien des bords 25d et 25e des feuilles minces 16d et 16e sur la rampe 36 est assuré par un profilé 37 présentant deux bords recourbés 38d et 38e disposés de manière à ce que les bords 25d et 25e se trouvent entre la rampe 36 et ces bords recourbés 38d et 38e respectivement. D'autre part, les bords recourbés 38 présentent des ondulations 39, ce qui leur donne une certaine souplesse et leur permet de maintenir les bords 25 en appui sur la rampe 36 lorsque le profilé 37 est maintenu sur la rampe 36.

La force d'application des bords recourbés 38 sur les bords 25 des écrans réfractaires est suffisante pour maintenir ceux-ci en appui sur la rampe 36, mais pas trop grande cependant afin que les bords 25 puissent glisser librement par rapport aux bords recourbés 38 du profilé lorsque les écrans réfractaires se dilatent dans le sens transversal.

On voit encore sur la figure 6 qu'on a prévu le long du profilé 37 un certain nombre de puits 40 pour le passage de vis 42 qui permettent d'une part de maintenir le profilé 37 sur la rampe 36 et, d'autre part, la rampe 36 sur un profilé 44. Ce dernier est monté sur la structure 30 de l'engin grâce à une embase 46 reposant sur la structure par l'intermédiaire d'une cale isolante 48. D'autre part, on a prévu un certain nombre d'évidements 50 dans le profilé afin d'alléger celui-ci.

On voit encore sur la figure 6 que les rebords 29 des feuilles minces 16d et 16e sont très proches l'un de l'autre, la distance entre eux étant juste suffisante pour permettre la dilatation des écrans réfractaires lors de l'échauffement. Pour permettre le passage des puits 40, on a prévu des encoches telles que 31 sur les bords longitudinaux des feuilles 16. Il peut y avoir, par exemple, une encoche sur chaque bord, à mi-longueur des feuilles 16, mais on ne sortirait pas du cadre de l'invention en modifiant le nombre et la position des encoches.

La profondeur des puits 40 est sensiblement égale à la hauteur de la tête 41 de la vis 42. Cette disposition permet de réduire les perturbations aérodynamiques et elle est rendue possible grâce à l'épaisseur très faible des feuilles 16 et du profilé 37 : la hauteur de ce dernier, et donc la profondeur de la gouttière 28, sont de l'ordre de quelques millimètres.

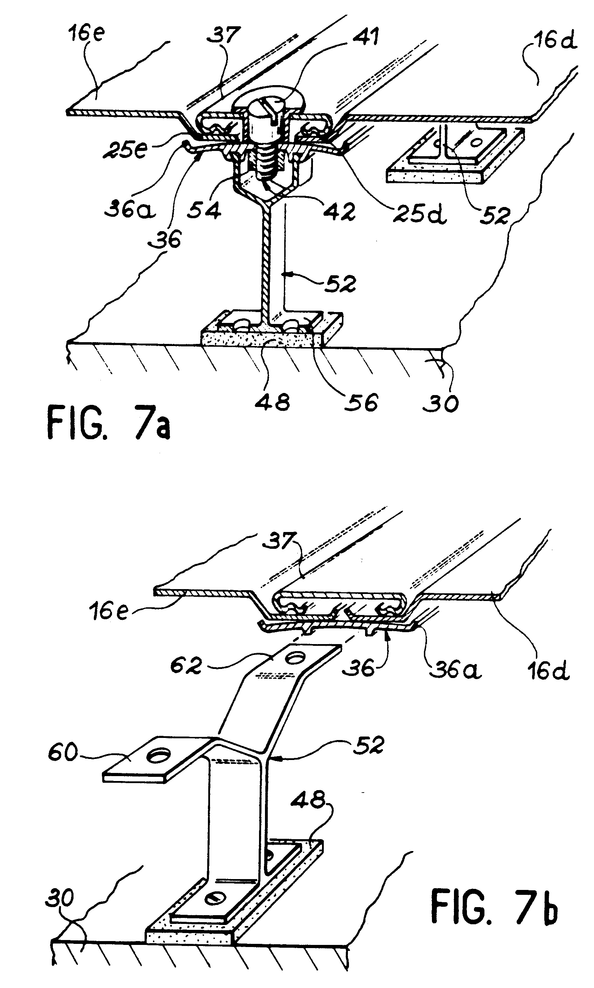

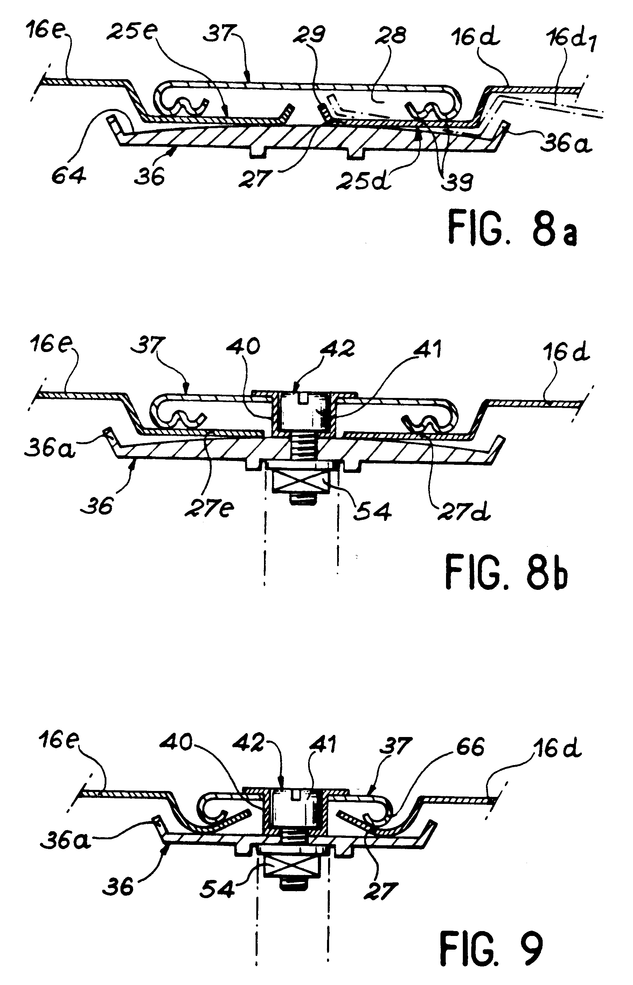

Dans la variante de la figure 7a, on retrouve la rampe 36 sur laquelle reposent les bords 25d et 25e des feuilles minces 16d et 16e grâce au profilé 37. Cependant, la rampe 36 n'est plus maintenue par un profilé, mais par un ensemble de pieds 52 reposant sur la structure 30 de l'engin par l'intermédiaire d'une embase 56 reposant sur une cale isolante 48. Les pieds sont également fixés à la rampe 36, par exemple à l'aide de vis (non représentées). La rampe 36 comporte deux bords 36a dirigés vers le haut : l'intérêt de cette disposition sera expliqué ci-dessous en référence à la figure 8a.

D'autre part, les vis 42 ne servent plus à visser la rampe dans le profilé, mais sont maintenues par un écrou 54. La distance entre deux pieds 52 consécutifs peut varier en cas d'accident de la structure de l'engin dû par exemple à la présence de cadres de structure, supports internes de structure, tuyauteries, portes ou autres appareils.

Dans le cas de la figure 7b, les pieds 52 sont semblables à ceux de la figure 7a à part qu'ils comportent deux pattes 60 et 62 placées suivant la direction longitudinale de la rampe 36, celle-ci étant fixée sur chacune des pattes 60 et 62. On peut également utiliser des pieds ne comportant qu'une seule patte de fixation.

La manière dont les bords des feuilles minces 16 sont maintenus sur la rampe 36 apparaît mieux sur la vue en coupe de la figure 8a. Sur cette figure, on voit que les bords 25d et 25e des feuilles minces reposent sur la surface supérieure 64 de la rampe 36. Cette surface est de préférence courbe, ce qui lui permet de recevoir éventuellement les bords de deux feuilles minces 16 qui ne seraient pas coplanaires, par exemple la feuille 16e et la feuille $16d_1$, cette dernière étant représentée schématiquement en traits mixtes sur la partie droite de la figure.

On voit aussi que les ondulations 39 prévues le long des bords du profilé de maintien 37 sont en appui sur les brides 27 à l'intérieur des gouttières 28. D'autre part, les ondulations 39 sont simplement en appui sur les brides 27 et ces dernières en appui sur la surface supérieure 64 de la rampe 36 ; ainsi, lors de l'échauffement, les différentes pièces peuvent glisser les unes par rapport aux autres, permettant ainsi d'absorber les dilatations. De plus, la présence des ondulations 39 en appui sur la bride 27 limite la pénétration de l'eau sous le profilé 37 et les rebords 36a de la rampe 36 permettent de canaliser l'eau qui aurait pénétré accidentellement. La hauteur totale du profilé 37 correspond à la profondeur de la gouttière 28 afin que les surfaces supérieures du profilé 37 et des feuilles minces 16 soient sensiblement dans le prolongement les unes des autres afin de ne pas nuire aux caractéristiques aérodynamiques de l'appareil.

La figure 8b, semblable à la figure 8a, illustre le même montage, mais à l'emplacement d'une vis de fixation 42. On voit que celle-ci est placée à l'intérieur d'un puits 40 et maintenue sur la rampe 36 par un écrou 54. C'est au moment de la mise en place des vis 42 que le puits 40 est appliqué sur la rampe 36 et provoque l'application du profilé 37 sur les brides 27d et 27e des feuilles minces 16d et 16e.

Dans le cas de la figure 9, les bords du profilé 37 ne comportent pas d'ondulations mais une courbure simple 66 tandis que la bride 27 de la feuille 16 est courbe et non plane comme dans le cas des figures 8a et 8b. Le bord 66 est toujours en appui sur la bride 27 et le fonctionnement est le même que précédemment. Dans le cas de la figure 9 également, la hauteur de la tête de vis 41 est égale à la profondeur du puits 40.

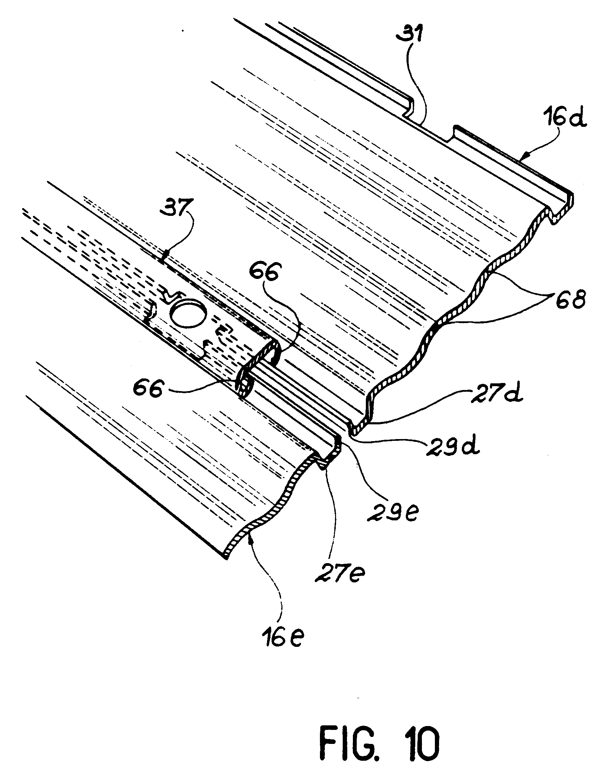

La figure 10 illustre une variante dans laquelle les feuilles minces 16d et 16e présentent des ondulations longitudinales 68 de faible amplitude : ces ondulations permettent d'absorber la dilatation dans le sens transversal sans gêner l'écoulement aérodynamique. Dans ce cas, il est préférable de ne pas utiliser de raidisseur comme la feuille ondulée 17 illustrée à la figure 4 car cela pourrait gêner la dilatation. Dans cette variante, on utilise de préférence un profilé 37 semblable à celui de la figure 9 avec deux bords recourbés 66.

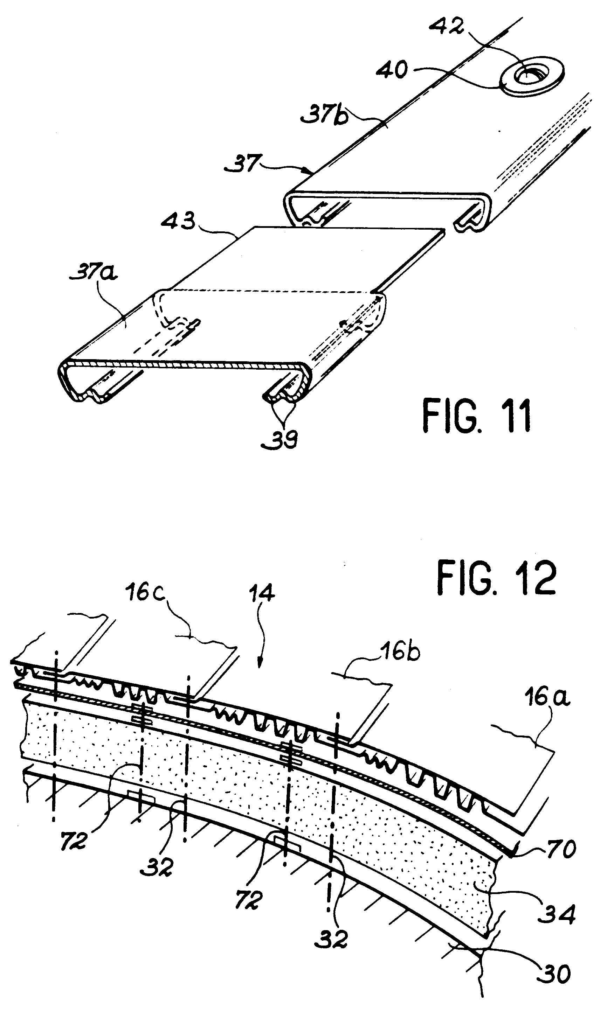

La vue en perspective de la figure 11 montre que, dans le mode de réalisation préféré, le profilé 37 se compose d'éléments emboîtés les uns dans les autres. Cette figure illustre le raccordement entre deux éléments 37a et 37b. On voit qu'à l'extrémité de l'élément 37a, les bords de celui-ci, et donc les ondulations 39, ont été découpés afin de ménager une languette 43. Cette dernière pénètre sous l'élément 37b de sorte que la continuité entre les surfaces supérieures des éléments 37a et 37b est maintenue. Bien entendu, cette construction peut également être utilisée avec le mode de réalisation de la figure 9.

La figure 12 montre comment on peut compléter le dispositif par une feuille supplémentaire servant de protection thermique de secours. On voit sur cette figure l'écran réfractaire 14, constitué des feuilles minces 16a, 16b, 16c, ..., monté sur la structure 30 de l'engin par des moyens de fixation 32 représentés schématiquement en traits mixtes.

Les moyens de fixation 32 servent également à maintenir la couche isolante 34. Une feuille supplémentaire 70 en métal réfractaire est intercalée entre l'écran 14 et la couche 34 et elle est maintenue sur la structure 30 de l'engin par des moyens de fixation 72 également représentés en traits mixtes. Le rôle de la feuille supplémentaire 70 est de servir de barrière thermique de secours en cas d'arrachement accidentel d'une partie de l'écran 14 ; c'est pourquoi elle n'est pas liée mécaniquement à celui-ci. La présence de la feuille 70 permet à l'engin de rester intact après atterrissage, même si la feuille 70 est dégradée ou déformée. Bien entendu, on ne sortirait pas du cadre de l'invention en plaçant la feuille 70 à un autre endroit, par exemple entre la couche isolante 34 et la structure 30 de l'engin.

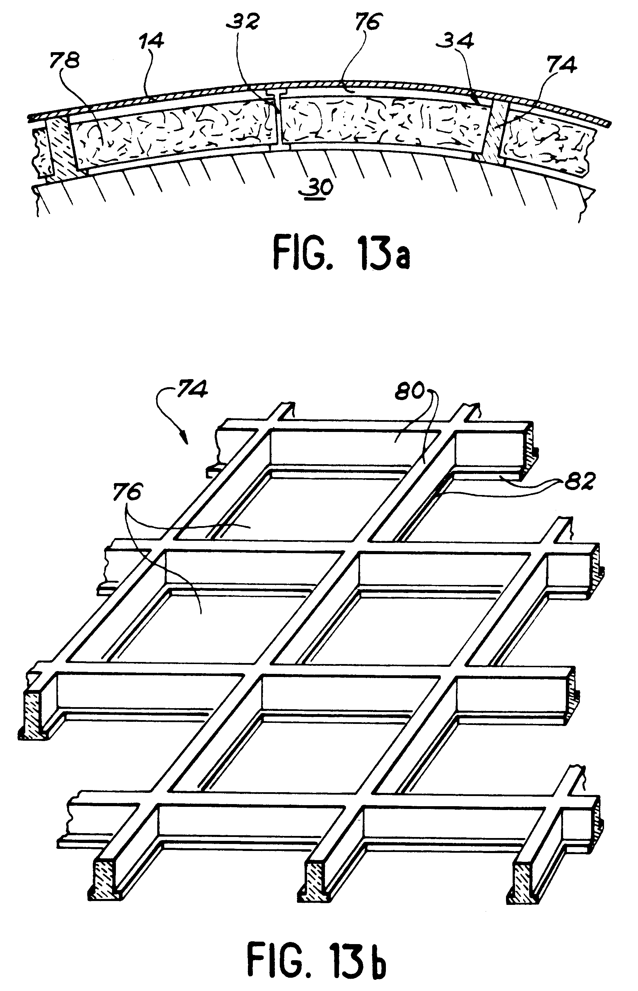

Enfin, les figures 13a et 13b montrent comment la couche isolante 34 peut être réalisée sous forme hybride. Sur la figure 13a, on retrouve l'écran réfractaire 14 fixé sur la structure 30 de l'engin par les moyens de fixation 32. Dans cette variante, la couche isolante 34 est constituée, d'une part, d'un gaufrage rigide 74 sur lequel s'appuie l'écran réfractaire 14, ce gaufrage délimitant sur la surface à protéger des poches contiguës 76, et, d'autre part, d'éléments souples 78 placés dans les poches ainsi définies. Le gaufrage 74 se compose d'un ensemble de parois rigides 80 disposées sensiblement perpendiculairement à la structure 30 de l'engin et à l'écran réfractaire 14, ce dernier s'appuyant sur les parois rigides 80. Ces dernières présentent, du côté de la structure 30 de l'engin, un rebord 82 sur lequel reposent les éléments souples 78. Les moyens de fixation 32 de l'écran réfractaire 14 peuvent également servir à fixer les éléments souples 78. Dans l'exemple représenté ici, les poches 76 ont la forme d'un carré dont la longueur des côtés est de l'ordre de 30 à 40 cm, mais on ne sortirait pas du cadre de l'invention en modifiant la forme et les dimensions des poches. Enfin, une telle disposition est utilisable aussi bien lorsque la surface à protéger est plane (figure 13b) que lorsqu'elle est courbe (figure 13a).

L'élément de protection thermique objet de l'invention présente de nombreux avantages dont le principal est la simplification des travaux de définition, de mise au point, de fabrication et de contrôle sur l'écran réfractaire. En effet, ces éléments standardisés peuvent être réalisés industriellement par des méthodes classiques, ce qui diminue les coûts de dessin, de fabrication et de pose puisqu'avec des feuilles de formes et de dimensions identiques on peut couvrir une très grande partie de la surface de l'engin. D'autre part, en raison de la souplesse des feuilles minces, il n'y a pas lieu de redéfinir la protection thermique au cas où l'on changerait la forme de l'engin en cours de projet. Dans le cas des tuiles ou des éléments rigides, si on change la forme ou la courbure de la structure de l'engin, il faut redéfinir les tuiles ou éléments rigides correspondants, ce qui allonge les délais et augmente le coût des études. On retrouve le même problème en cas d'évolution, en cours de projet, de l'aménagement interne ou externe de l'avion : forme et emplacement des portes, trappes, verrières, supports ou cadres situés à l'intérieur de l'appareil. Dans le cas des tuiles ou des éléments rigides, tout est à refaire alors qu'avec la présente invention, il suffit de changer l'emplacement des pieds ou supports 52 (figures 7a et 7b) et éventuellement de découper différemment les feuilles minces et la couche isolante. De plus, avec l'invention, le nombre de rechanges est réduit car les feuilles minces 16 peuvent être toutes identiques ou presque alors qu'avec le système à tuiles, il faut une ou deux rechanges pour chaque tuile car les tuiles sont presque toutes différentes.

Un autre avantage très important de l'invention est que les protections thermiques sont légères, la masse surfacique d'une telle protection étant de l'ordre de 5 à 6 kg/m$^2$ dans les zones à 1000°C avec des feuilles minces métalliques. Ces protections s'accommodent bien des déformations d'ensemble de l'avion ainsi que des déformation locales de la structure sous-jacente, ce qui permet d'alléger cette dernière (on peut tolérer un flambage local). Elles s'accommodent également des défauts de la surface à protéger, ce qui dispense en particulier de mastiquer le fuselage, opération qui augmente le coût global des structures et des protections. De plus, les protections objets de l'invention résistent bien aux vibrations d'origine aérodynamique ou résultant de l'environnement ainsi qu'aux efforts d'origine aérodynamique qui sont variables d'un point à un autre de l'avion et qui varient également au cours du temps lors de la phase de rentrée dans l'atmosphère.

De plus, les protections thermiques selon l'invention résistent bien aux chocs et aux vibrations sans subir de variation de leurs caractéristiques, notamment en cas de pluie, de grêle, de foudroiement et protègent efficacement l'appareil contre ces perturbations.

La construction des protections thermiques selon l'invention permet d'avoir une surface extérieure régulière (donc peu de perturbations aérodynamiques) et une bonne étanchéité à l'eau et au plasma.

D'autre part, un tel système est plus fiable que les dispositifs de l'art antérieur. En effet, étant donné que tous les éléments sont identiques ou presque, ceci conduit à une simplification et une standardisation des processus de fabrication et de contrôle. D'autre part, la longueur totale des jonctions est plus faible que dans le cas où on utilise des tuiles. Comme les jonctions de l'élément externe ne coïncident pas obligatoirement avec les éventuelles jonctions de la couche isolante, le support est mieux protégé. De plus, l'absence de tout collage procure une grande sécurité. Si on utilise une feuille de protection supplémentaire intercalée entre la couche isolante et l'écran réfractaire, on garantit le fuselage de la destruction. Quant aux opérations de contrôle et de réhabilitation de l'engin entre deux vols, celles-ci sont beaucoup plus simples et plus rapides, donc moins coûteuses, que dans le cas où l'on utilise des tuiles. Ceci provient de la standardisation et du fait que chaque élément est immédiatement accessible et contrôlable facilement : chaque pièce est visible et aucune n'est inaccessible. Le démontage pour examen et le remplacement éventuel des écrans réfractaires sont aisés car il n'y a pas besoin de démonter les écrans voisins. Enfin, les éléments de protection thermique selon l'invention sont réutilisables, soit sur le même engin ou objet, soit sur un autre.

Il est encore à noter que, si la description ci-dessus concerne l'application particulière aux engins aéronautiques ou spatiaux, les éléments de protection thermique de l'invention peuvent être utilisés sur tout objet soumis à des échauffements importants, par exemple un objet se trouvant dans une soufflerie à plasma.

**Revendications**

1. Elément de protection thermique réutilisable pour un objet (30) soumis à des échauffements importants, par exemple un engin aéronautique ou spatial, comportant un écran réfractaire (14) et une couche isolante (34), entre l'écran réfractaire (14) et l'objet (30), comportant principalement des moyens de fixation de l'écran réfractaire (14) sur l'objet (30) comprenant :
   - une rampe allongée (36) ;
   - des moyens de fixation de cette rampe (36) sur l'objet (30) ; et
   - des moyens de maintien de l'écran réfractaire (14) sur la rampe (36),
   l'élément étant caractérisé en ce que :
   - l'écran réfractaire est de forme générale rectangulaire, comprenant au moins une feuille mince (16d) en matériau réfractaire et ayant une souplesse suffisante pour s'adapter à la forme de l'objet (30) au niveau de la zone à protéger, c'est-à-dire parallèle ou quasi parallèle à la surface de l'objet (30) à protéger dans la zone au-dessus de laquelle elle se trouve ;
   - les moyens de fixation de l'écran réfractaire (14) agissent sur deux écrans réfractaires adjacents et superposés au même endroit et interagissent ;
   - les moyens de maintien de l'écran réfractaire (14) sur la rampe (36) sont constitués d'un profil (37) serré par des vis (42) se vissant dans les moyens de fixation de la rampe (36) sur l'objet (30) pour serrer les bords de deux écrans réfractaires (14) adjacents sur la rampe (36) ;
   - les moyens de fixation de la rampe (36) sur l'objet (30) sont constitués d'un profilé (44) ou de pieds ou supports (52) fixés sur l'objet (30) et sur lesquels est montée la rampe (36) ;
   - la surface de la rampe (36) sur laquelle vient se placer le bord d'au moins un écran réfractaire est courbe afin de pouvoir maintenir deux écrans réfractaires (14) dont les feuilles minces (16e, $16d_1$) ne sont pas coplanaires et permettre d'obtenir le galbe de l'écran réfractaire (14) ;
   la structure de ces moyens de fixation de l'écran réfractaire (14) leur permettant ainsi de :
   - participer au maintien et à la création du galbe de l'écran réfractaire (14) ;
   - participer à la résistance mécanique de l'écran réfractaire (14) ;
   - permettre le montage contigu de deux écrans réfractaires (14) dont les feuilles minces (16e, $16d_1$) ne sont pas coplanaires ;
   - assurer une étanchéité vis-à-vis de l'air, de l'eau et du plasma ; et
   - chaque élément pouvant ainsi constituer avec des éléments voisins identiques une bande de grande longueur dont la forme épouse en tout point le galbe de la surface externe de l'objet (30), cette bande contribuant à former une surface aérodynamiquement lisse dont le galbe est continu.

2. Elément de protection thermique réutilisable selon la revendication 1, caractérisé en ce que le métal réfractaire est choisi dans le groupe constitué par le niobium, le titane, le tantale, ainsi que leurs alliages et les alliages à base de nickel ou de chrome.

3. Elément de protection thermique réutilisable selon la revendication 1, caractérisé en ce que la feuille mince (16) est réalisée en un matériau composite à base de fibres.

4. Elément de protection thermique réutilisable selon l'une quelconque des revendications 1 à 3, caractérisé en ce que ladite feuille mince (16) est équipée de moyens de rigidification.

5. Elément de protection thermique réutilisable selon la revendication 4, caractérisé en ce que les moyens de rigidification comprennent une feuille (17) fixée sur la face de la feuille mince (16) située en regard de la couche isolante (34).

6. Elément de protection thermique réutilisable selon l'une quelconque des revendications 1 à 5, caractérisé en ce qu'il comprend une feuille supplémentaire servant à améliorer la résistance mécanique de l'écran réfractaire (14).

7. Elément de protection thermique réutilisable selon l'une quelconque des revendications 1 à 6, caractérisé en ce qu'il comporte des moyens pour absorber la dilatation de l'écran réfractaire (14) dans au moins une direction.

8. Elément de protection thermique réutilisable selon la revendication 7, caractérisé en ce que l'écran réfractaire (14) comprenant au moins deux feuilles minces (16a, 16b) placées l'une à la suite de l'autre, l'une (16a) de ces feuilles comporte à une extrémité un décrochement (18) pouvant s'engager librement sous le bord correspondant (20) de l'autre feuille mince (16b) permettant ainsi d'absorber la dilatation des deux feuilles minces (16a, 16b) dans le sens longitudinal.

9. Elément de protection thermique réutilisable selon l'une quelconque des revendications 7 et 8, caractérisé en ce que la feuille mince (16) comprend des ondulations longitudinales (68) permettant d'absorber la dilatation dans le sens transversal.

10. Elément de protection thermique réutilisable selon l'une quelconque des revendications précédentes, caractérisé en ce que le profilé (37) fixé sur la rampe (36), a au moins un bord recourbé (38) disposé de sorte que le bord (25) de l'écran réfractaire puisse se placer entre le bord du profilé et la rampe (36), ledit bord recourbé (38) ayant une souplesse suffisante pour appliquer le bord (25) de l'écran réfractaire (14) sur la rampe tout en permettant la dilatation de cet écran réfractaire.

11. Elément de protection thermique réutilisable selon l'une quelconque des revendications 1 ou 10, caractérisé en ce que les moyens de fixation (32) de l'écran réfractaire (14) sur l'objet (30) servent également à fixer la couche isolante (34) sur cet objet (30).

## Claims

1. Reusable thermal protection member for an object (30) subject to great heating, e.g. an aircraft or spacecraft, incorporating a refractory shield (14) and an insulating layer (34) between the refractory shield (14) and the object (30), mainly comprising means for fixing the refractory shield (14) to the object (30) and incorporating an elongated ramp (36), means for fixing said ramp (36) to the object and means for maintaining the refractory shield (14) on the said ramp (36), the member being characterized in that:

the refractory shield is generally rectangular, having at least one thin refractory material sheet (16d) and a flexibility adequate to adapt to the shape of the object (30) in the area to be protected, i.e. parallel or quasi-parallel to the surface of the object (30) to be protected in the area above which it is located;

the fixing means for the refractory shield (14) act on two adjacent refractory shields (14), which are superimposed at the same location and interact;

the means for maintaining the refractory shield on the ramp (36) are constituted by a profile (37) tightened by screws (42) screwing into the means for fixing the ramp (36) to the object (30) for securing the edges of the two adjacent refractory shields (14) to the ramp (36);

the means for fixing the ramp (36) to the object (30) are constituted by a shaped section (44), or legs, or supports (52) fixed to the object (30) and on which is installed the ramp (36);

the surface of the ramp (36) on which is placed the edge of at least one refractory shield is curved, so as to be able to secure two refractory shields (14), whose thin sheets (16e, $16d_1$) are not coplanar and so as to make it possible to obtain the contour of the refractory shield (14);

the structure of said refractory shield (14) fixing means consequently enabling them to:

participate in maintaining and creating the contour of the refractory shield (14);

participate in the mechanical strength of the refractory shield (14);

permit the contiguous fitting of the two refractory shields (14), whereof the thin sheets (16e, $16d_1$) are not coplanar;

ensure a tightness with respect to air, water and plasma;
and
consequently each member can constitute with identical adjacent members a very long strip, whose shape at all points adopts the contour of the outer surface of the object (30), said strip contributing to forming an aerodynamically smooth surface with a continuous contour.

2. Reusable thermal protection member according to claim 1, characterized in that the refractory metal is chosen from within the group constituted by niobium, titanium, tantalum, as well as their alloys and alloys based on nickel or chromium.

3. Reusable thermal protection member according to claim 1, characterized in that the thin sheet (16) is made from a fibre-based composite material.

4. Reusable thermal protection member according to any one of the claims 1 to 3, characterized in that the thin sheet (16) is equipped with stiffening means.

5. Reusable thermal protection member according to claim 4, characterized in that the stiffening means incorporate a sheet (17) fixed to the face of the thin sheet (16) positioned facing the insulating layer (34).

6. Reusable thermal protection member according to any one of the claims 1 to 5, characterized in that it incorporates a supplementary sheet for improving the mechanical strength of the refractory shield (14).

7. Reusable thermal protection member according to any one of the claims 1 to 6, characterized in that it comprises means for absorbing the expansion of the refractory shield (14) in at least one direction.

8. Reusable thermal protection member according to claim 7, characterized in that the refractory shield (14) has at least two thin sheets (16a, 16b) positioned one following the other, one (16a) of the said sheets having at one end a break (18) able to freely engage beneath the corresponding edge (20) of the other thin sheet (16b), thus making it possible to absorb the expansion of the two thin sheets (16a, 16b) in the longitudinal direction.

9. Reusable thermal protection member according to any one of the claims 7 and 8, characterized in that the thin sheet (16) has longitudinal undulations (68) making it possible to absorb the expansion in the transverse direction.

10. Reusable thermal protection member according to any one of the preceding claims, characterized in that the profiled part (37) fixed to the ramp (36) has at least one curved edge (38) arranged in such a way that the edge (25) of the refractory shield can be positioned between the edge of the profiled part and the ramp (36), said curved edge (38) having an adequate flexibility for applying the edge (25) of the refractory shield (14) to the ramp, whilst permitting the expansion of said refractory shield.

11. Reusable thermal protection member according to either of the claims 1 or 10, characterized in that the fixing means (32) of the refractory shield (14) to the object (30) are also used for fixing the insulating layer (34) to the said object (30).

**Patentansprüche**

1. Wiederverwendbares thermisches Schutzelement für einen starken Erwärmungen unterworfenen Gegenstand (30), zum Beispiel ein Luft- oder Raumfahrtkörper, mit einem feuerfesten Schirm (14) und einer isolierenden Schicht (34) zwischen dem feuerfesten Schirm (14) und dem Gegenstand, das im wesentlichen Befestigungsvorrichtungen für den feuerfesten Schirm (14) an dem Gegenstand (30) umfaßt, mit:
   - einer länglichen Rampe (36);
   - Vorrichtungen zum Befestigen dieser Rampe (36) an dem Gegenstand (30); und
   - Vorrichtungen zum Halten des feuerfesten Schirms (14) auf der Rampe (36),
      wobei das Element dadurch gekennzeichnet ist, daß:
   - der feuerfeste Schirm eine allgemein rechtwinklige Form besitzt, wobei er wenigstens ein dünnes Blatt (16d) aus einem feuerfesten Material umfaßt, das eine ausreichende Elastizität besitzt, um sich im Bereich der zu schützenden Zone an die Form des Gegenstands (30) anzupassen, das heißt parallel oder quasi-parallel an die Oberfläche des zu schützenden Gegenstands (30) in der Zone, oberhalb derer es sich befindet;
   - die Befestigungsvorrichtungen für den feuerfesten Schirm (14) auf zwei benachbarte und an derselben Stelle sich überlappende, feuerfeste Schirme wirken und wechselwirken;
   - die Vorrichtungen zum Halten des feuerfesten Schirms (14) auf der Rampe (36) aus einem Profilträger (37) bestehen, der mit Schrauben (42) verschraubt ist, die sich in die Befestigungsvorrichtungen für die Rampe (36) an dem Gegenstand (30) schrauben, um die Ränder der beiden benachbarten, feuerfesten Schirme (14) auf die Rampe (36) zu schrauben;

- die Befestigungsvorrichtung für die Rampe (36) an dem Gegenstand aus einem Profilträger (44) oder aus Füßen oder aus Trägern (52) bestehen, die an dem Gegenstand (30) befestigt sind und auf die die Rampe (36) montiert ist;

- die Oberfläche der Rampe (36), auf die der Rand von wenigstens einem feuerfesten Schirm angeordnet ist, gekrümmt ist, um zwei feuerfeste Schirme (14) halten zu können, deren dünne Blätter (16e, 16d$_1$) nicht koplanar sind, und um zu ermöglichen, die Form des feuerfesten Schirms (14) zu erhalten; wobei die Struktur dieser Befestigungsvorrichtungen für den feuerfesten Schirm (14) ihnen so ermöglicht:

- am Halten und an der Bildung der Form des feuerfesten Schirms (14) mitzuwirken;

- am mechanischen Widerstand des feuerfesten Schirms (14) mitzuwirken;

- die unmittelbar anstoßende Montage von zwei feuerfesten Schirmen (14), deren dünne Blätter (16e, 16d$_1$) nicht koplanar sind, zu ermöglichen;

- eine Dichtigkeit gegenüber der Luft, dem Wasser und dem Plasma sicherzustellen; und

- wobei jedes Element auf diese Weise mit benachbarten, identischen Elementen ein Band großer Länge bilden kann, dessen Form in jedem Punkt die Form der externen Oberfläche des Objekts (30) annimmt, wobei dieses Band dazu beiträgt, eine aerodynamisch glatte Oberfläche zu bilden, deren Form stetig ist.

2. Wiederverwendbares thermisches Schutzelement nach Anspruch 1, dadurch gekennzeichnet, daß das feuerfeste Metall aus der Gruppe ausgewählt wird, die aus Niob, Titan, Tantal ebenso wie aus deren Legierungen und den Legierungen auf Nickel- oder Chrombasis besteht.

3. Wiederverwendbares thermisches Schutzelement nach Anspruch 1, dadurch gekennzeichnet, daß das feuerfeste dünne Blatt (16) aus einem Verbundmaterial auf Faserbasis besteht.

4. Wiederverwendbares thermisches Schutzelement nach einem der Ansprüche 1 bis 3, dadurch gekennzeichnet, daß das dünne Blatt (16) mit Kühlvorrichtungen ausgestattet ist.

5. Wiederverwendbares thermisches Schutzelement nach Anspruch 4, dadurch gekennzeichnet, daß die Kühlvorrichtungen ein auf der Seite des dünnen Blattes (16), die sich gegenüber der isolierenden Schicht (34) befindet, befestigtes Blatt (17) umfassen.

6. Wiederverwendbares thermisches Schutzelement nach einem der Ansprüche 1 bis 5, dadurch gekennzeichnet, daß es ein zusätzliches Blatt umfaßt, das zum Verbessern des mechanischen Widerstands des feuerfesten Schirms (14) dient.

7. Wiederverwendbares thermisches Schutzelement nach einem der Ansprüche 1 bis 6, dadurch gekennzeichnet, daß es Vorrichtungen zum Absorbieren der Ausdehnung des feuerfesten Schirms (14) in wenigstens einer Richtung umfaßt.

8. Wiederverwendbares thermisches Schutzelement nach Anspruch 7, dadurch gekennzeichnet, daß, wenn der feuerfeste Schirm (14) wenigstens zwei dünne Blätter (16a, 16b) umfaßt, die aufeinander folgend angeordnet sind, das eine (16a) dieser Blätter ein Verschiebungsende (18) umfaßt, das sich frei unter den entsprechenden Rand (20) des anderen dünnen Blattes (16b) anordnen kann und so ermöglicht, die Ausdehnung der beiden dünnen Blätter (16a, 16b) in der longitudinalen Richtung zu absorbieren.

9. Wiederverwendbares thermisches Schutzelement nach einem der Ansprüche 7 und 8, dadurch gekennzeichnet, daß das dünne Blatt (16) longitudinale Wellen (68) umfaßt, die ermöglichen, die Ausdehnung in der lateralen Richtung zu absorbieren.

10. Wiederverwendbares thermisches Schutzelement nach einem der vorhergehenden Ansprüche, dadurch gekennzeichnet, daß der auf der Rampe (36) befestigte Profilträger (37) wenigstens einen zurückgebogenen Rand (38) besitzt, der so angeordnet ist, daß der Rand (25) des feuerfesten Schirms sich zwischen dem Rand des Profilträgers und der Rampe (36) anordnen kann, wobei der zurückgebogene Rand (38) eine Elastizität besitzt, die ausreicht, den Rand (25) des feuerfesten Schirms (14) auf die Rampe zu bringen, wobei die Ausdehnung dieses feuerfesten Schirms ermöglicht wird.

11. Wiederverwendbares thermisches Schutzelement nach einem der Ansprüche 1 oder 10, dadurch gekennzeichnet, daß die Befestigungsvorrichtungen (32) für den feuerfesten Schirm (14) auf dem Gegenstand (30) ebenso zum Befestigen der isolierenden Schicht (34) auf diesem Gegenstand dienen.

# FIG. 1

# FIG. 2

# FIG. 3

FIG. 4

FIG. 5

FIG. 6

FIG. 7a

FIG. 7b

FIG. 8a

FIG. 8b

FIG. 9

FIG. 10

FIG. 11

FIG. 12

EP 0 214 893 B1

FIG. 13a

FIG. 13b

20